# EUROPEAN PATENT SPECIFICATION

(11) **EP 4 391 210 B1**
(45) Date of publication and mention of the grant of the patent: **29.04.2026**
(21) Application number: 23863363.0
(22) Date of filing: 11.08.2023
(51) Int. Cl.: H01M 50/591, H01M 50/503, B32B 27/08, B32B 27/28, B32B 27/34, B32B 27/30, B32B 1/08, H01M 50/526, H01M 50/588

(54) **INTERMODULAR BUSBAR INCLUDING INSULATING LAYER AND BATTERY PACK INCLUDING SAME**
INTERMODULARE STROMSCHIENE MIT ISOLATIONSSCHICHT UND BATTERIEPACK DAMIT
BARRE OMNIBUS INTERMODULAIRE COMPRENANT UNE COUCHE ISOLANTE ET BLOC-BATTERIE LA COMPRENANT

(30) Priority: 05.09.2022 KR 20220111786
(43) Date of publication of application: 26.06.2024
(73) Proprietor: LG Energy Solution, Ltd., Seoul 07335 (KR)
(72) Inventor: HWANG, Sung Tack, Daejeon 34122 (KR)
(74) Representative: Goddar, Heinz J.
(86) International application number: PCT/KR2023/011965
(87) International publication number: WO 2024/053884

(56) References cited:
- CN-A- 108 376 755
- CN-U- 214 624 512
- CN-U- 215 770 643
- KR-A- 20130 080 023
- KR-A- 20160 049 260
- KR-A- 20220 042 795
- KR-B1- 102 221 801
- US-B1- 10 236 098

## Description

### [Technical Field]

This application claims the benefit of priority to Korean Patent Application No. 2022-0111786 filed on September 5, 2022.

The present invention relates to an inter-module busbar including an insulating layer and a battery pack including the same. More particularly, the present invention relates to an inter-module busbar configured such that an insulated state of the inter-module busbar is maintained even when fire breaks out in a battery pack, whereby it is possible to prevent short circuit even when in contact with a peripheral portion, and a battery pack including the same.

### [Background Art]

There is growing demand for secondary batteries capable of addressing air pollution caused by the use of fossil fuels and storing electrical energy generated from alternative energy. For example, a lithium secondary battery, which has high energy density per weight, is being used as an energy source not only for mobile devices, such as a cellular phone, a tablet, a Bluetooth earphone, and an electronic cigarette, but also for medium and large-sized devices, such as an electric bicycle, an electric kickboard, and electric vehicles.

As the kinds of devices using the lithium secondary battery as an energy source increase, application of the lithium secondary battery to devices that require high capacity and high power has expanded.

In line with this trend, there has been an increase in manufacture and use of a battery module, in which a plurality of battery cells is electrically connected to each other, and a battery pack, in which battery modules are connected to each other in series and/or parallel.

Meanwhile, an inter-module busbar is widely used as a means for electrical connection between battery cells in the battery module and a means for electrical connection between battery modules in the battery pack. The inter-module busbar is useful as a large current conduction means since the inter-module busbar is capable of allowing large current to stably flow therethrough even with a relatively small thickness compared to a cable.

Generally, the inter-module busbar may be used in a form in which a metal plate including copper or aluminum having excellent electrical conductivity is disposed inside and the remaining part of the outer surface of the metal plate, excluding opposite ends of the metal plate at which coupling is performed to secure electrical insulation, is covered with a tube or an injection-molded product.

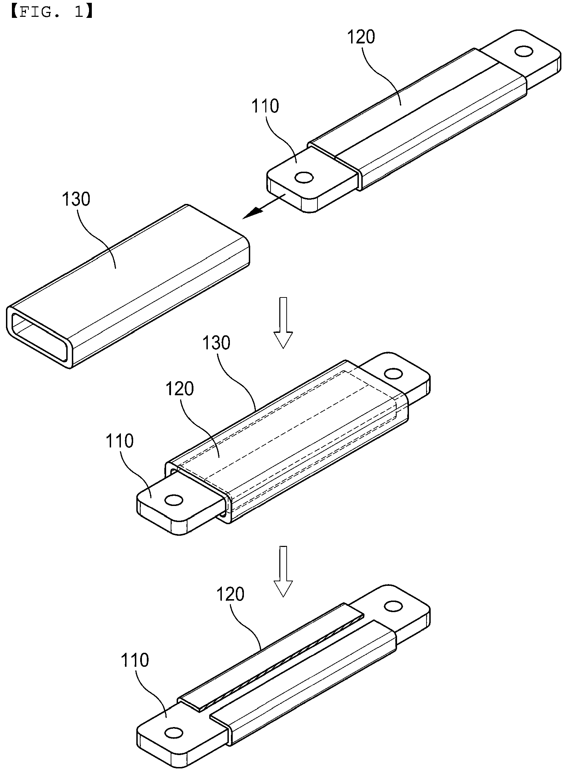

In connection therewith, FIG. 1 is a perspective view showing a conventional inter-module busbar before and after damage by fire.

An inter-module busbar is used for electrical connection between battery modules, and FIG. 1 shows the structure of the inter-module busbar and the state in which the inter-module busbar is damaged by fire.

Referring to FIG. 1, the conventional inter-module busbar includes a metal plate 110 made of an electrically conductive material, an insulating tape 120 configured to enclose the remaining part of an outer surface of the metal plate 110 excluding opposite ends thereof, and a silicone tube 130 added to an outer surface of the insulating tape 120.

Each of the insulating tape 120 and the silicone tube 130 is made of an electrically insulating material, and therefore it is possible to secure insulation of configurations of the inter-module busbar other than a device coupled to opposite ends of the inter-module busbar.

When a battery cell in a battery pack ignites or explodes, thermal energy of the battery cell is transferred to neighboring cells, causing fire. When the silicone tube 130 of the inter-module busbar, which connects battery modules to each other, is damaged by fire in the battery cell, the insulation tape 120 may open up, whereby the metal plate 110 inside may be exposed.

When the exposed metal plate comes into contact with a structure of the battery pack, short circuit may occur, and such internal short circuit may form an electrical closed circuit in the battery pack, which may accelerate thermal runaway in the battery pack.

In connection therewith, Patent Document 1 discloses a busbar including a metal bar made of a metal material, an insulative tube configured to cover the remaining part of the metal bar excluding opposite ends thereof, a fireproof tape configured to enclose the metal bar in the insulative tube, and a bandage member made of a fire-resistant material and interposed between the insulative tube and the fireproof tape, the bandage member being configured to fix the fireproof tape to the metal bar in a state of enclosing the fireproof tape.

In Patent Document 1, the fireproof tape is strongly fixed by the bandage member even though the insulative tube is burned away by fire, whereby it is possible to prevent the metal bar from directly contacting a surrounding metal object and thus to prevent short circuit.

Patent Document 2 discloses a busbar including a metal bar made of a metal material, a bandage member configured to enclose the remaining part of the metal bar excluding opposite ends thereof, and an insulative tube configured to enclose both the metal bar and the bandage member.

In Patent Document 2, the bandage member on the surface of the metal bar remains attached to the surface of the metal bar even in the event of fire, whereby the metal bar does not directly contact a surrounding metal object, and therefore it is possible to prevent short circuit.

However, each of the busbars of Patent Document 1 and Patent Document 2 further includes a bandage member, whereby the thickness and weight of the busbar may be increased.

Therefore, there is a need for an inter-module busbar configured such that an increase in volume and weight of the inter-module busbar is minimized while exposure of a metal material inside is prevented even though an insulating material added to an outer surface of the busbar is burned away by fire.

### (Prior Art Documents)

(Patent Document 1) Korean Patent Application Publication No. 2021-0050983 (2021.05.10)
(Patent Document 2) Korean Patent Application Publication No. 2021-0141095 (2021.11.23)

The document CN 214 624 512 U discloses a high-voltage connecting piece for a power battery. The connecting piece is wrapped in a glass fiber cloth layer, surrounded by a a fireproof layer and an anti-wear layer. The fireproof layer is a silica gel that changes into a hard ceramic body at high temperatures.

### [Disclosure]

### [Technical Problem]

The present invention has been made in view of the above problems, and it is an object of the present invention to provide an inter-module busbar configured such that a metal plate inside is not exposed even though a second insulating layer, which is an outer surface, is ceramized and cracked in the event of fire, whereby it is possible to prevent short circuit caused by contact with a surrounding metal object.

### [Technical Solution]

An inter-module busbar according to the present invention is defined in claim 1.

The second insulating layer may include at least one selected from the group consisting of highly heat-resistant silicone, polyphenylene sulfide, polyetheretherketone, polyphthalamide, polyamide, polysulfone, polyethersulfone, polyetherimide, acrylic fiber, and polybenzimidazole.

The second insulating layer may be ceramized at a temperature of at least 1,200°C.

When the first insulating layer expands, the metal plate in the first insulating layer and the second insulating layer may not be exposed.

The first insulating layer and the second insulating layer may not be added to opposite ends of the metal plate, and the metal plate may be exposed to constitute an electrical connection portion.

The electrical connection portion may be provided with at least one opening for connection.

The present invention provides a battery pack including battery modules electrically connected using the inter-module busbar.

The battery pack may include a battery pack housing configured to receive two or more battery modules, a pack frame configured to allow the battery modules to be disposed in spaces partitioned therein in order to position the battery modules, and an inter-module busbar configured to electrically connect the battery modules to each other, wherein the inter-module busbar may be disposed such that a first insulating layer and a second insulating layer are located at an upper surface of the pack frame, and electrical connection portions provided at opposite ends of the inter-module busbar to which the first insulating layer and the second insulating layer are not added may be coupled to connectors of the battery modules.

When the second insulating layer is ceramized and the first insulating layer expands due to an increase in temperature of the pack frame, the insulated state of the inter-module busbar may be maintained while the metal plate is not exposed in the state in which the inter-module busbar is in contact with the pack frame.

In addition, the present invention may provide various combinations of the above solving means.

### [Advantageous Effects]

As is apparent from the above description, an inter-module busbar according to the present invention is configured such that, even though a second insulating layer is ceramized and cracked in the event of fire, a first insulation layer, which is expandable at high temperatures, penetrates into the cracks in the second insulation layer and fills gaps therein, whereby it is possible to prevent a metal plate from being exposed.

In the event of fire, therefore, it is possible to secure insulation of the busbar even though the busbar remains in contact with a surrounding metal object.

### [Description of Drawings]

FIG. 1 is a perspective view showing a conventional inter-module busbar before and after damage by fire.
FIG. 2 is a plan view and a vertical sectional view of an inter-module busbar according to the present invention.
FIG. 3 is a vertical sectional view showing the inter-module busbar according to the present invention before and after damage by fire.
FIG. 4 is a perspective view of a battery pack including the inter-module busbar of FIG. 2.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the drawings.

An inter-module busbar according to the present invention is a type of busbar used as an electrical connection means, and refers to a means configured to interconnect battery modules disposed in a battery pack.

Consequently, it is possible to set the length of the inter-module busbar in consideration of the distance between battery modules to be connected and to set the width and thickness of the inter-module busbar in consideration of the amount of current that passes through the inter-module busbar and the resistance of the inter-module busbar.

In addition, the shape of the inter-module busbar may be configured in consideration of the positions of connectors of the battery modules, and the inter-module busbar may have various shapes, such as a shape in which the inter-module busbar is bent upwards or downwards so as to be parallel to the overall width, an L-shape in which the inter-module busbar is bent by 90 degrees in the plane, a [-shape in which the inter-module busbar is bent at opposite ends thereof in the plane, and a 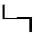 -shape.

Since each of the opposite ends of the inter-module busbar is usually used as a connection portion for coupling to an external device, a structure for connection, such as a fastening hole for bolt fastening, is provided.

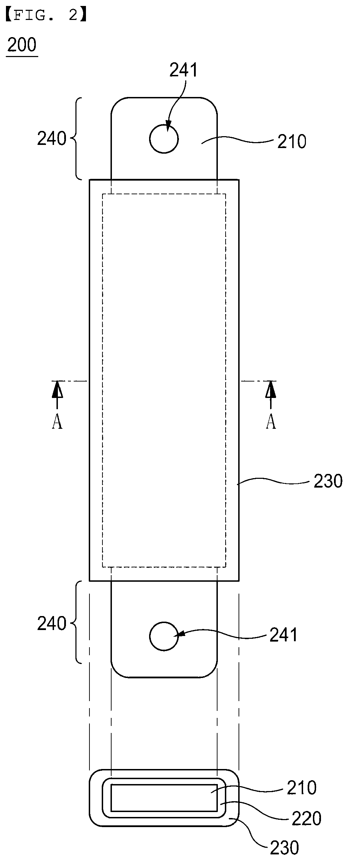

FIG. 2 is a plan view and a vertical sectional view of an inter-module busbar according to the present invention, wherein a section taken along A-A in the plan view at an upper part of FIG. 2 is shown as a vertical sectional view at a lower part of FIG. 2.

Referring to FIG. 2, the inter-module busbar 200 includes a metal plate 210 for electrical connection, a first insulating layer 220 configured to enclose at least a part of the metal plate 210, the first insulating layer being expandable at high temperatures, and a second insulating layer 230 added to the first insulating layer 220, the second insulating layer being configured to be ceramized at high temperatures.

The first insulating layer 220 and the second insulating layer 230 are not added to opposite ends of the metal plate 210, and the ends of the metal plate 210 are exposed to constitute electrical connection portions 240.

At least one opening 241 for connection is formed in each of the electrical connection portions 240.

One of the electrical connection portions 240 formed at the opposite ends of the inter-module busbar 200 may be connected to a positive electrode connector of a first battery module, and the other may be connected to a negative electrode connector of a second battery module. Specifically, when a bolting operation utilizing bolts and nuts is performed such that the inter-module busbar is connected to the connectors of the battery modules, the bolts may be inserted into the openings 241 and the nuts may be fastened to the bolts, whereby the inter-module busbar 200 may be connected to the first battery module and the second battery module.

The second insulating layer 230 constitutes the outermost surface with which flames come into direct contact in the event of fire, and therefore the second insulating layer may include at least one selected from the group consisting of highly heat-resistant silicone, polyphenylene sulfide, polyetheretherketone, polyphthalamide, polyamide, polysulfone, polyethersulfone, polyetherimide, acrylic fiber, and polybenzimidazole.

Specifically, the second insulating layer 230 may be highly heat-resistant silicone which is ceramized and in which small cracks are formed when exposed to flames or high-temperature gases.

The highly heat-resistant silicone exhibits the performance of a general silicone resin at room temperature, but at high temperatures, the structure of the highly heat-resistant silicone is changed to a ceramized structure, whereby the highly heat-resistant silicone has ceramic properties, and therefore the highly heat-resistant silicone may withstand impact while maintaining certain strength.

The second insulating layer 230 may be made of a material that is ceramized at high temperatures, and may be ceramized, for example, at 1,200°C or higher.

Consequently, the shape of the second insulating layer may be maintained and the second insulating layer may exhibit flame resistance below 1,200°C. However, the second insulating layer may be ceramized and cracked at 1,200°C or higher.

When a battery cell in a battery pack ignites and explodes and heat is transferred to the inter-module busbar coupled to the battery modules, the second insulating layer may be ceramized by gas or flames discharged from the battery cell, but the shape of the second insulating layer may be maintained.

Consequently, it is possible to prevent a conventional problem in which, when a silicone tube is added to an outer surface of a metal plate, the silicone tube is burned away, whereby the metal plate is exposed.

The first insulating layer 220 may include expandable flame-retardant silicone that is expandable at high temperatures.

The thermal expansion temperature of the first insulating layer 220 may be higher than the temperature at which the second insulating layer 230 is ceramized.

That is, when a high-temperature environment is formed due to fire, the second insulating layer is ceramized and cracked. When flames or venting gases penetrate through the cracks and come into contact with the first insulating layer, the first insulating layer, which is expandable at high temperatures, expands and fills gaps between the cracks. As described above, the metal plate is not exposed to the outside at the parts to the first and second insulating layers of the inter-module busbar are added, and therefore it is possible to secure insulation.

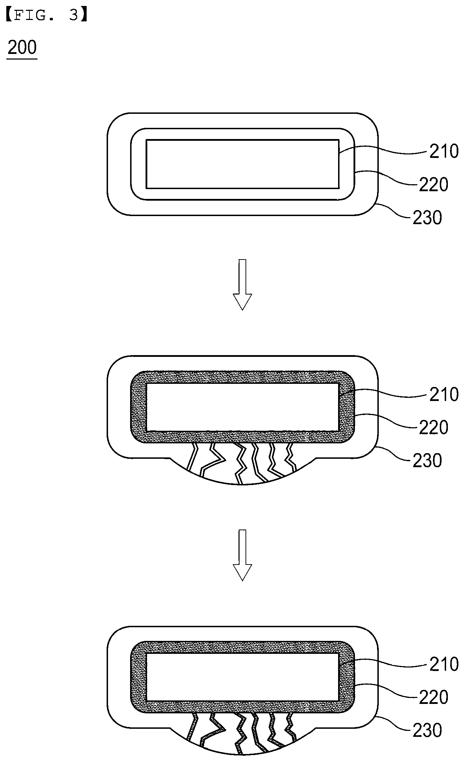

FIG. 3 is a vertical sectional view showing the inter-module busbar according to the present invention before and after damage by fire.

FIG. 3 shows three steps of a process in which the inter-module busbar is damaged by fire, wherein time progresses from top to bottom.

Referring to the first figure of FIG. 3, which is a vertical sectional view of a normal inter-module busbar 200 in which no fire breaks out, an outer surface of the innermost metal plate 210 is sequentially enclosed by the first insulating layer 220, which is expandable at high temperatures, and the second insulating layer 230, which is ceramized at high temperatures.

Referring to the second figure of FIG. 3, when fire breaks out in the battery cell, flames or high-temperature gases are transferred to the inter-module busbar, whereby the second insulating layer 230, which is the outermost layer, is ceramized and cracked, and the first insulating layer 220 and the outside of the second insulating layer 230 communicate with each other through the cracks.

Referring to the third figure of FIG. 3, when the second insulating layer 230 is ceramized and cracked when the temperature increases, high-temperature gases and flames are transferred to the first insulating layer 220 through the cracks, whereby the first insulating layer 220 expands and is inserted into the cracks to fill spaces in the cracks.

Since the first insulating layer 220 expands to fill the gaps in the cracks formed in the second insulating layer 230, as described above, the part of the inter-module busbar to which the first insulating layer 220 and the second insulating layer 230 are added may remain enclosed by the first insulating layer 220 and the second insulating layer 230 without communication with the outer surface of the second insulating layer 230.

When the second insulating layer is ceramized by fire and the first insulating layer expands, therefore, the part of the metal plate in the first insulating layer and the second insulating layer is not exposed.

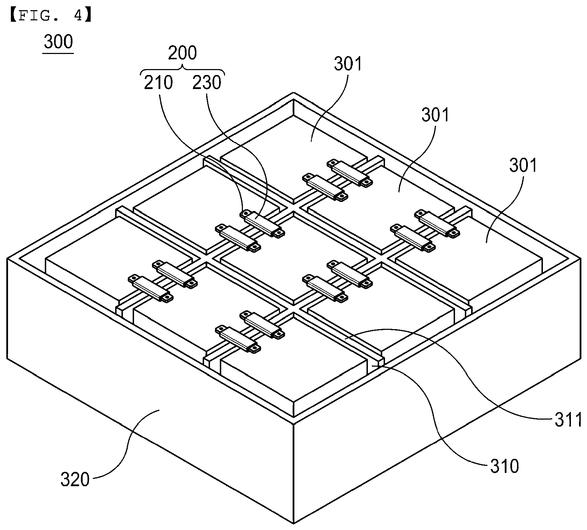

FIG. 4 is a perspective view of a battery pack including the inter-module busbar of FIG. 2.

The battery pack shown in FIG. 4 is configured such that a plurality of battery modules 301 is electrically connected to each other via the inter-module busbar 200 according to the present invention. Although FIG. 4 shows a battery pack including nine battery modules, which is merely an example for illustrative purposes, the arrangement and number of the battery modules constituting the battery pack and the coupling position and shape of the inter-module busbar used to interconnect the battery modules are not limited thereto.

Referring to FIG. 4, the battery pack 300 according to the present invention includes a battery pack housing 320 configured to receive two or more battery modules 301, a pack frame 310 configured to allow the battery modules 301 to be disposed in spaces partitioned therein in order to position the battery modules, and an inter-module busbar 200 configured to electrically connect the battery modules 301 to each other, wherein the inter-module busbar 200 is disposed such that a first insulating layer and a second insulating layer 230 are located at an upper surface 311 of the pack frame, and electrical connection portions provided at opposite ends of a metal plate 210 to which the first insulating layer and the second insulating layer 230 are not added are coupled to connectors of the battery modules 301.

Since the second insulating layer 230 of the inter-module busbar 200 is disposed in contact with the pack frame 310, as described above, it is possible to secure insulation between the inter-module busbar 200 and the pack frame 310 in a steady state of the battery pack 300 even though the pack frame 310 is made of an electrically conductive metal material.

However, when flames or high-temperature gases are discharged from battery cells constituting the battery pack 300, whereby the temperature of the pack frame 310 increases, the second insulating layer 230 is ceramized, and the first insulating layer 220 expands, insulation of the inter-module busbar 200 may be maintained even in the state in which the inter-module busbar is in contact with the pack frame 310.

Meanwhile, even when the inter-module busbar is not disposed at the upper surface of the pack frame 310 and the inter-module busbar is disposed in contact with a component constituting the battery pack and made of an electrically conductive metal material, unlike what is shown in FIG. 4, insulation between the inter-module busbar and the component made of the electrically conductive metal material may be maintained in the event of fire in the battery pack.

In the present invention, as described above, the first insulating layer and the second insulating layer attached to the metal plate are not burned away and remain added to the outer surface of the metal plate in the event of fire. In addition, since the first insulating layer that has expanded fills cracks formed in the second insulating layer, the metal plate may not be exposed to the outside. Therefore, the inter-module busbar may remain insulated even through the inter-module busbar is in contact with a metal component adjacent thereto.

Those skilled in the art to which the present invention pertains will appreciate that various applications and modifications are possible within the category of the present invention as defined by the claims.

### (Description of Reference Numerals)

- 110, 210:: Metal plates
- 120:: Insulating tape
- 130:: Silicone tube
- 200:: Inter-module busbar
- 220:: First insulating layer
- 230:: Second insulating layer
- 240:: Electrical connection portion
- 241:: Opening
- 300:: Battery pack
- 301:: Battery module
- 310:: Pack frame
- 311:: Upper surface of pack frame
- 320:: Battery pack housing

## Claims

1. An inter-module busbar (200) comprising:
a metal plate (210) for electrical connection;
a first insulating layer (220) configured to enclose at least a part of the metal plate (210); and
a second insulating layer (230) added to the first insulating layer (220), the second insulating layer (230) being configured to be ceramized and cracked at high temperatures so as to allow flames or venting gases to penetrate through cracks formed in the second insulating layer (230) and to contact the first insulating layer (220),
wherein the first insulating layer (230) is expandable at high temperatures and configured to fill gaps between the cracks by expansion.

2. The inter-module busbar according to claim 1, wherein the second insulating layer (230) comprises at least one selected from a group consisting of highly heat-resistant silicone, polyphenylene sulfide, polyetheretherketone, polyphthalamide, polyamide, polysulfone, polyethersulfone, polyetherimide, acrylic fiber, and polybenzimidazole.

3. The inter-module busbar according to claim 2, wherein the second insulating layer (230) is ceramized at a temperature of at least 1,200°C.

4. The inter-module busbar according to claim 3, wherein, when the first insulating layer (220) expands, the metal plate (210) in the first insulating layer (220) and the second insulating layer (230) is not exposed.

5. The inter-module busbar according to claim 1, wherein the first insulating layer (220) and the second insulating layer (230) are not added to opposite ends of the metal plate (210), and the metal plate (210) is exposed to constitute an electrical connection portion (240).

6. The inter-module busbar according to claim 5, wherein the electrical connection portion (240) is provided with at least one opening (241) for connection.

7. A battery pack (300) comprising battery modules (301) electrically connected using the inter-module busbar (200) according to any one of claims 1 to 6.

8. The battery pack according to claim 7, wherein
the battery pack (300) comprises:
a battery pack housing (320) configured to receive two or more battery modules (301);
a pack frame (310) configured to allow the battery modules (301) to be disposed in spaces partitioned therein in order to position the battery modules (301); and
an inter-module busbar (200) configured to electrically connect the battery modules (301) to each other, wherein
the inter-module busbar (200) is disposed such that a first insulating layer (220) and a second insulating layer (230) are located at an upper surface of the pack frame (311), and
electrical connection portions (240) provided at opposite ends of the inter-module busbar (200) to which the first insulating layer (220) and the second insulating layer (230) are not added are coupled to connectors of the battery modules (301).

9. The battery pack according to claim 8, wherein, when the second insulating layer (230) is ceramized and the first insulating layer (220) expands due to an increase in temperature of the pack frame (310), an insulated state of the inter-module busbar (200) is maintained while the metal plate (210) is not exposed in a state in which the inter-module busbar (200) is in contact with the pack frame (310).

## Patentansprüche

1. Zwischenmodul-Sammelschiene (200) aufweisend:
eine Metallplatte (210) zur elektrischen Verbindung;
eine erste Isolierschicht (220), die konfiguriert ist, zumindest einen Teil der Metallplatte (210) zu umschließen; und
eine zweite Isolierschicht (230), die zu der ersten Isolierschicht (220) hinzugefügt ist, wobei die zweite Isolierschicht (230) konfiguriert ist, bei hohen Temperaturen keramisiert zu werden und Risse zu bilden, und dadurch zu ermöglichen, dass Flammen oder Entlüftungsgase durch in der zweiten Isolierschicht (230) gebildeten Risse eindringen und die erste Isolierschicht (220) kontaktieren,
wobei die erste Isolierschicht (230) bei hohen Temperaturen expandierbar ist und konfiguriert ist, Lücken zwischen den Rissen durch Expansion zu füllen.

2. Zwischenmodul-Sammelschiene nach Anspruch 1, wobei die zweite Isolierschicht (230) zumindest eines enthält, das aus einer Gruppe ausgewählt ist, die aus hochwärmebeständigem Silikon, Polyphenylensulfid, Polyetheretherketon, Polyphthalamid, Polyamid, Polysulfon, Polyethersulfon, Polyetherimid, Acrylfaser und Polybenzimidazol besteht.

3. Zwischenmodul-Sammelschiene nach Anspruch 2, wobei die zweite Isolierschicht (230) bei einer Temperatur von zumindest 1.200 °C keramisiert wird.

4. Zwischenmodul-Sammelschiene nach Anspruch 3, wobei, wenn die erste Isolierschicht (220) expandiert, die Metallplatte (210) in der ersten Isolierschicht (220) und der zweiten Isolierschicht (230) nicht freiliegt.

5. Zwischenmodul-Sammelschiene nach Anspruch 1, wobei die erste Isolierschicht (220) und die zweite Isolierschicht (230) nicht zu gegenüberliegenden Enden der Metallplatte (210) hinzugefügt sind und die Metallplatte (210) freiliegt, um einen elektrischen Verbindungsabschnitt (240) zu bilden.

6. Zwischenmodul-Sammelschiene nach Anspruch 5, wobei der elektrische Verbindungsabschnitt (240) mit zumindest einer Öffnung (241) zur Verbindung versehen ist.

7. Batteriepack (300) aufweisend Batteriemodule (301), die unter Verwendung der Zwischenmodul-Sammelschiene (200) nach einem der Ansprüche 1 bis 6 elektrisch verbunden sind.

8. Batteriepack nach Anspruch 7, wobei
der Batteriepack (300) aufweist:
ein Batteriepackgehäuse (320), das konfiguriert ist, zwei oder mehr Batteriemodule (301) aufzunehmen;
einen Packrahmen (310), der konfiguriert ist, zu ermöglichen, dass die Batteriemodule (301) in darin unterteilten Räumen angeordnet werden, um die Batteriemodule (301) zu positionieren; und
eine Zwischenmodul-Sammelschiene (200), die konfiguriert ist, die Batteriemodule (301) elektrisch miteinander zu verbinden, wobei
die Zwischenmodul-Sammelschiene (200) derart angeordnet ist, dass eine erste Isolierschicht (220) und eine zweite Isolierschicht (230) an einer oberen Oberfläche des Packrahmens (311) angeordnet sind, und
elektrische Verbindungsabschnitte (240), die an gegenüberliegenden Enden der Zwischenmodul-Sammelschiene (200) vorgesehen sind, zu denen die erste Isolierschicht (220) und die zweite Isolierschicht (230) nicht hinzugefügt sind, mit Verbindern der Batteriemodule (301) gekoppelt sind.

9. Batteriepack nach Anspruch 8, wobei, wenn die zweite Isolierschicht (230) keramisiert wird und die erste Isolierschicht (220) aufgrund eines Temperaturanstiegs des Packrahmens (310) expandiert, ein isolierter Zustand der Zwischenmodul-Sammelschiene (200) beibehalten wird, während die Metallplatte (210) in einem Zustand, in dem die Zwischenmodul-Sammelschiene (200) in Kontakt mit dem Packrahmen (310) ist, nicht freiliegt.

## Revendications

1. Barre omnibus inter-module (200) comprenant :
une plaque métallique (210) pour une connexion électrique ;
une première couche isolante (220) configurée pour entourer au moins une partie de la plaque métallique (210) ; et
une deuxième couche isolante (230) ajoutée à la première couche isolante (220), la deuxième couche isolante (230) étant configurée pour être céramisée et fissurée à températures élevées de façon à permettre à des flammes ou des gaz de ventilation de pénétrer à travers des fissures formées dans la deuxième couche isolante (230) et d'entrer en contact avec la première couche isolante (220),
dans laquelle la première couche isolante (230) peut se dilater à températures élevées et est configurée pour remplir les espaces entre les fissures par dilatation.

2. Barre omnibus inter-module selon la revendication 1, dans laquelle la deuxième couche isolante (230) comprend un ou plusieurs éléments sélectionnés dans un groupe constitué de silicone hautement résistant à la chaleur, sulfure de polyphénylène, polyétheréthercétone, polyphtalamide, polyamide, polysulfone, polyéthersulfone, polyétherimide, fibre acrylique et polybenzimidazole.

3. Barre omnibus inter-module selon la revendication 2, dans laquelle la deuxième couche isolante (230) est céramisée à une température d'au moins 1200°C.

4. Barre omnibus inter-module selon la revendication 3, dans laquelle, quand la première couche isolante (220) se dilate, la plaque métallique (210) dans la première couche isolante (220) et la deuxième couche isolante (230) n'est pas exposée.

5. Barre omnibus inter-module selon la revendication 1, dans laquelle la première couche isolante (220) et la deuxième couche isolante (230) ne sont pas ajoutées à des extrémités opposées de la plaque métallique (210), et la plaque métallique (210) est exposée pour constituer une connexion électrique (240).

6. Barre omnibus inter-module selon la revendication 5, dans laquelle la partie connexion électrique (240) est munie d'une ou plusieurs ouvertures (241) pour une connexion.

7. Bloc-batterie (300) comprenant des modules de batterie (301) connectés électriquement en utilisant la barre omnibus inter-module (200) selon l'une quelconque des revendications 1 à 6.

8. Bloc-batterie selon la revendication 7, dans laquelle
le bloc-batterie (300) comprend :
un boîtier de bloc-batterie (320) configuré pour recevoir au moins deux modules de batterie (301) ;
un cadre de bloc-batterie (310) configuré pour permettre aux modules de batterie (301) d'être disposés dans des espaces divisés afin de positionner les modules de batterie (301) ; et
une barre omnibus inter-module (200) configurée pour connecter électriquement les modules de batterie (301) l'un à l'autre, dans laquelle
la barre omnibus inter-module (200) est disposée de telle sorte qu'une première couche isolante (220) et une deuxième couche isolante (230) sont situées à une surface supérieure du cadre de bloc-batterie (311), et
des parties de connexion électrique (240) fournies à des extrémités opposées de la barre omnibus inter-module (200) où la première couche isolante (220) et la deuxième couche isolante (230) ne sont pas ajoutées, sont couplées à des connecteurs des modules de batterie (301).

9. Bloc-batterie selon la revendication 8, dans laquelle, quand la deuxième couche isolante (230) est céramisée et que la première couche isolante (220) se dilate du fait de la montée en température du cadre de bloc-batterie (310), un état isolé de la barre omnibus inter-module (200) est maintenu pendant que la plaque métallique (210) n'est pas exposée dans un état où la barre omnibus inter-module (200) est en contact avec le cadre de bloc-batterie (310).
